# EUROPEAN PATENT APPLICATION

(11) **EP 4 683 058 A1**
(43) Date of publication of application: **21.01.2026**
(21) Application number: 24881491.5
(22) Date of filing: 16.10.2024
(51) Int. Cl.: H01M 50/15, H01M 50/103, H01M 50/593, H01M 50/586, H01M 10/052, H01M 10/0525, H01M 10/054

(54) **BATTERY CELL, BATTERY, AND ELECTRIC DEVICE**

(30) Priority: 27.10.2023 CN 202322898869 U
(71) Applicant: Contemporary Amperex Technology Co., Limited, Ningde, Fujian 352100 (CN)
(72) Inventor: WU, Yu, Ningde, Fujian 352100 (CN); HUANG, Shoujun, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2024/125252
(87) International publication number: WO 2025/087125

(57) **Abstract**

A battery cell (20), a battery (10), and an electric apparatus are provided, which can improve the pass rate of assembly of batteries (10). The battery cell (20) includes: a casing (212) having an opening; an end cap (211) closing the opening; and an insulating member (23) disposed within the casing (212), where one of the insulating member (23) and the end cap (211) is provided with a first groove (231), and the other thereof is provided with a first protrusion (213), the first groove (231) and the first protrusion (213) cooperating with each other.

## Description

### CROSS-REFERENCE TO RELATED APPLICATIONS

The present application claims priority to Chinese Patent Application No. 202322898869.X, filed on October 27, 2023 and entitled "BATTERY CELL, BATTERY, AND ELECTRIC APPARATUS", which is incorporated herein by reference in its entirety.

### TECHNICAL FIELD

Embodiments of the present application relate to the field of batteries, and more particularly, to a battery cell, a battery, and an electric apparatus.

### BACKGROUND

Energy conservation and emission reduction are key to the sustainable development of the automotive industry. In this context, electric vehicles have become an important part of the sustainable development of the automotive industry due to their advantages in energy conservation and environmental protection. For electric vehicles, battery technology is a critical factor in their development.

With the development of battery technology, battery production techniques also need continuous improvement. How to improve the pass rate of battery assembly remains a problem to be solved.

### SUMMARY

Embodiments of the present application provide a battery cell, a battery, and an electric apparatus, which can improve the pass rate of battery assembly.

According to a first aspect, a battery cell is provided, including: a casing having an opening; an end cap closing the opening; and an insulating member disposed within the casing, where one of the insulating member and the end cap is provided with a first groove, and the other thereof is provided with a first protrusion, the first groove and the first protrusion cooperating with each other.

**In** the battery cell provided by embodiments of the present application, the first protrusion and the first groove cooperate with each other inside the battery cell, which can restrict deformation of the end cap due to its own weight, thereby reducing gaps between the end cap and the casing caused by bending deformation of the end cap, and improving the pass rate of assembly during the process of assembling the end cap with the casing.

**In** some embodiments, the first protrusion includes a plurality of first protrusions, the plurality of first protrusions being distributed at two ends of the battery cell along a length direction of the battery cell, where a dimension of the battery cell in the length direction is greater than a dimension of the battery cell in a width direction, and the dimension of the battery cell in the width direction is greater than a dimension of the battery cell in a thickness direction.

Providing the first protrusions at two ends of the battery cell in the length direction can provide support points for the end cap at its edge regions, such that when the end cap has a tendency to bend toward its central region, the interaction between the sidewalls of the first protrusion and the sidewalls of the first groove restricts the deformation of the end cap, thereby reducing gaps between the end cap and the casing caused by bending deformation of the end cap, and improving the pass rate of assembly during the process of assembling the end cap with the casing.

**In** some embodiments, a ratio of a dimension of the first protrusion in the width direction of the battery cell to the dimension of the battery cell in the width direction is F, where F satisfies 30% ≤ F ≤ 90%, the dimension of the battery cell in the length direction is greater than the dimension of the battery cell in the width direction, and the dimension of the battery cell in the width direction is greater than the dimension of the battery cell in the thickness direction.

The ratio of the dimension of the first protrusion in the width direction of the battery cell to the dimension of the battery cell in the width direction satisfying the above relationship can increase the contact area between the first protrusion and the first groove, enabling restriction of the bending deformation of the end cap over a larger range, making it less likely for the first protrusion to slip out of the first groove. Additionally, this facilitates alignment of the edge of the end cap with the edge of the casing, improving the pass rate of assembly of the end cap with the casing.

In some embodiments, a surface of the first protrusion facing a center of the end cap is an inclined surface.

The inclined surface on the first protrusion enables the first protrusion to more easily enter the first groove, reducing the difficulty of cooperation between the first protrusion and the first groove, and improving assembly efficiency.

In some embodiments, a projection of the first protrusion in the width direction of the battery cell is trapezoidal, where the dimension of the battery cell in the length direction is greater than the dimension of the battery cell in the width direction and the dimension of the battery cell in the width direction is greater than the dimension of the battery cell in the thickness direction.

During the assembly of the end cap with the casing of the battery cell, the trapezoidal structure enables the first protrusion to more easily enter the first groove, reducing the difficulty of cooperation between the first protrusion and the first groove, and improving assembly efficiency.

In some embodiments, a surface where the first groove cooperates with the first protrusion is an inclined surface.

During the assembly of the end cap with the casing of the battery cell, the inclined surface of the trapezoid facilitates guiding the first protrusion into the first groove, reducing the precision required for aligning the first protrusion with the first groove. The inclined surface in the length direction of the end cap facilitates restricting the bending deformation of the end cap under gravity, enabling reduction of the gap between two ends of the end cap in the length direction and the edge region of the casing, and improving the pass rate of assembly of the battery cell.

In some embodiments, the end cap includes a main body portion and the first protrusion, the first protrusion being disposed on a surface of the main body portion facing an interior of the battery cell, with a first gap between the insulating member and the main body portion; or, the insulating member includes a main body portion and the first protrusion, the first protrusion being disposed on a surface of the main body portion facing the end cap, with a first gap between the main body portion and the end cap.

Considering that both the insulating member and the end cap may have manufacturing tolerances, the first gap can minimize interference between the insulating member and the end cap, facilitating improvement of the fit between the end cap and the casing, thereby improving the pass rate of assembly of the battery cell.

In some embodiments, a dimension of the first gap in the thickness direction of the battery cell is L, where L satisfies 0.05 mm ≤ L ≤ 0.5 mm, the dimension of the battery cell in the length direction is greater than the dimension of the battery cell in the width direction, and the dimension of the battery cell in the width direction is greater than the dimension of the battery cell in the thickness direction.

This allows sufficient space between the end cap and the insulating member to accommodate manufacturing tolerances of the end cap and the insulating member, reducing the likelihood of interference between the insulating member and the end cap, and improving the fit between the end cap and the casing. Additionally, the first gap within this range can ensure that the space between the insulating member and the end cap is appropriately sized, maximizing the compactness of the internal structure arrangement of the battery cell.

In some embodiments, a second gap exists between a top wall of the first protrusion and a bottom wall of the first groove.

The second gap can minimize interference between the insulating member and the first protrusion, reducing the likelihood that the first protrusion abuts against the insulating member, which could make it difficult for the end cap and the casing to fit together, thereby facilitating improvement of the fit between the end cap and the casing, and improving the pass rate of assembly of the battery cell.

In some embodiments, a dimension of the second gap in the thickness direction of the battery cell is M, where M satisfies 0.05 mm ≤ M ≤ 0.5 mm, the dimension of the battery cell in the length direction is greater than the dimension of the battery cell in the width direction, and the dimension of the battery cell in the width direction is greater than the dimension of the battery cell in the thickness direction.

This allows sufficient space between the first protrusion and the insulating member to accommodate manufacturing tolerances of the first protrusion and the insulating member, reducing the likelihood of interference between the insulating member and the first protrusion, and improving the fit between the end cap and the casing. Additionally, the first gap within this range can enable the insulating member to provide insulation over as large an area as possible, reducing the possibility of the battery cell's housing becoming electrically charged.

In some embodiments, the end cap includes a main body portion and the first protrusion, the first protrusion being disposed on the surface of the main body portion facing the interior of the battery cell, where a distance between the top wall of the first protrusion and a surface of the main body portion facing away from the interior of the battery cell is N, where N satisfies 0.3 mm ≤ N ≤ 1.5 mm.

This enables good cooperation between the first protrusion and the first groove, enhancing the effect of the first protrusion in restricting movement of the end cap toward its center, thereby reducing gaps between the end cap and the casing due to bending deformation of the end cap, and improving the pass rate of assembly during the process of assembling the end cap with the casing.

In some embodiments, a dimension of the first groove in the length direction of the battery cell is greater than a dimension of the first protrusion in the length direction of the battery cell, where the dimension of the battery cell in the length direction is greater than the dimension of the battery cell in the width direction, and the dimension of the battery cell in the width direction is greater than the dimension of the battery cell in the thickness direction; and/or, a dimension of the first groove in the width direction of the battery cell is greater than the dimension of the first protrusion in the width direction of the battery cell, where the dimension of the battery cell in the length direction is greater than the dimension of the battery cell in the width direction and the dimension of the battery cell in the width direction is greater than the dimension of the battery cell in the thickness direction.

This allows the first protrusion to be more easily accommodated in the first groove during the assembly of the battery cell, thereby improving the assembly efficiency of the battery cell.

In some embodiments, an edge of the end cap has a first stepped structure, the first stepped structure overlapping the casing, where a ratio of a height of the first stepped structure to a thickness of the end cap is G, where G satisfies 40% ≤ G ≤ 60%.

Satisfying this range allows the first stepped structure to provide good positioning at the edge of the casing, making it less likely to be misaligned under external forces; on the other hand, it also enables the first stepped structure to have sufficient strength, making it less likely to be damaged during assembly, enhancing the strength of the end cap, and improving the connection strength between the end cap and the casing, thereby improving the pass rate of assembly of the battery cell.

In some embodiments, the first stepped structure is welded to the casing.

Welding the first stepped structure to the casing can increase the connection strength between the end cap and the casing, improving the pass rate of the battery cell.

In some embodiments, the casing includes a bottom wall and a sidewall, the bottom wall being opposite to the opening; and the battery cell includes an electrode assembly, the electrode assembly being accommodated in a space enclosed by the bottom wall and the sidewall and the insulating member being disposed between the sidewall and the electrode assembly.

The insulating member being disposed between the sidewall and the electrode assembly allows the first groove to be located between the sidewall and the electrode assembly, enabling the end cap to restrict bending deformation as close as possible to the casing, and enhancing the restrictive effect of the first protrusion and the first groove on the bending deformation of the end cap.

In some embodiments, the battery cell includes an electrode terminal, the electrode terminal being disposed on the end cap; or, the casing includes a bottom wall and a sidewall, the bottom wall being opposite to the opening, the battery cell includes an electrode terminal, and the electrode terminal is disposed on the sidewall.

The electrode terminal being disposed on the end cap facilitates good cooperation between the first protrusion and the first groove, enabling fit between the end cap and the casing, reducing gaps between the end cap and the casing due to bending deformation of the end cap, and improving the pass rate of assembly during the process of assembling the end cap with the casing.

The electrode terminal disposed on the sidewall allows the first protrusion and the first groove to be as close as possible to the edge region of the end cap, reducing gaps between the end cap and the sidewall due to bending deformation of the end cap through mutual restriction between the first protrusion and the first groove, thereby improving the pass rate of assembly of the battery cell.

In some embodiments, the electrode terminal is disposed on at least one sidewall arranged along a length direction of the battery cell.

Considering that the length of the end cap is much greater than its width and thickness, the bending deformation of the end cap is most severe in the length direction. Therefore, disposing the electrode terminal on at least one sidewall arranged along the length direction of the battery cell allows the first protrusion and the first groove to restrict the bending deformation of the end cap in the most severely deformed portion, facilitating enhancement of the restrictive effect of the first protrusion and the first groove on the bending deformation of the end cap.

In some embodiments, the casing includes a bottom wall and a sidewall, the bottom wall being opposite to the opening, and an area of a projection of the end cap in a direction perpendicular to a thickness direction of the end cap is greater than an area of a projection of the sidewall in a direction perpendicular to a thickness direction of the sidewall.

When the area of the end cap is relatively large, the cooperation between the first protrusion and the first groove can significantly restrict the bending deformation of the end cap, facilitating reduction of gaps between the end cap and the casing, improving the fit between the end cap and the casing, and thereby improving the pass rate of assembly of the battery cell.

In some embodiments, a surface of the end cap facing the interior of the battery cell is provided with the first protrusion, and a surface of the insulating member facing the end cap is provided with the first groove.

In the battery cell provided by embodiments of the present application, the first protrusion and the first groove cooperate with each other inside the battery cell, restricting deformation of the end cap due to its own weight, thereby reducing gaps between the end cap and the casing caused by bending deformation of the end cap, and improving the pass rate of assembly during the process of assembling the end cap with the casing. Additionally, by providing the first groove on the insulating member to accommodate the first protrusion, the internal structure of the battery cell can be reasonably arranged without requiring additional space inside the battery cell to accommodate the first protrusion, thereby reducing changes to the internal structure of the battery cell and lowering the update cost of the battery cell.

In some embodiments, a surface of the end cap facing away from the interior of the battery cell in a thickness direction of the battery cell has a second groove, the second groove corresponding to the first protrusion.

The second groove can indicate the position of the first protrusion on the surface of the end cap facing the interior of the battery cell from the side of the end cap facing away from the interior of the battery cell, identifying the end cap provided with the first protrusion, thereby facilitating assembly of the first protrusion on the end cap with the first groove on the insulating member in a cooperative manner. Additionally, this can simplify the processing technology of the first protrusion, improving production efficiency.

In some embodiments, a dimension of the end cap in the thickness direction is less than or equal to 0.4 mm; and/or, a dimension of the end cap in a length direction is greater than or equal to 300 mm.

When the end cap satisfies the above dimensional conditions, the first protrusion on the end cap and the first groove on the insulating member can cooperate with each other, effectively restricting the bending deformation of the end cap, thereby improving the welding quality between the end cap and the casing in subsequent processes, and improving the pass rate of assembly of the battery cell.

According to a second aspect, a battery is provided, including the battery cell according to any one of the embodiments of the first aspect.

According to a third aspect, an electric apparatus is provided, including the battery according to any one of the embodiments of the second aspect, the battery being configured to provide electric energy to the electric apparatus.

### BRIEF DESCRIPTION OF DRAWINGS

To more clearly illustrate the technical solutions of the embodiments of the present application, the drawings required for use in the embodiments of the present application are briefly described below. It is apparent that the drawings described below are only some embodiments of the present application, and those of ordinary skill in the art can obtain other drawings based on these drawings without creative effort.
FIG. 1 is a schematic structural diagram of a vehicle provided by an embodiment of the present application.
FIG. 2 is a schematic structural diagram of a battery provided by an embodiment of the present application.
FIG. 3 is a schematic structural diagram of a battery cell provided by an embodiment of the present application.
FIG. 4 is a schematic cross-sectional structural diagram of the battery cell in FIG. 3 along an A-A direction.
FIG. 5 is a schematic structural diagram of an end cap provided by an embodiment of the present application.
FIG. 6 is an enlarged schematic structural diagram of part C in FIG. 5.
FIG. 7 is an enlarged schematic structural diagram of part B in FIG. 4.
FIG. 8 is a schematic cross-sectional structural diagram of the battery cell in FIG. 3 along an E-E direction.
FIG. 9 is a schematic structural diagram of an insulating member provided by an embodiment of the present application.
FIG. 10 is a schematic cross-sectional structural diagram of the end cap in FIG. 5 along a D-D direction.
In the drawings, the drawings are not drawn to actual scale.

### DESCRIPTION OF EMBODIMENTS

The embodiments of the present application are further described in detail below with reference to the accompanying drawings and embodiments. The detailed description and drawings of the following embodiments are used to illustrate the principles of the present application by way of example but should not be used to limit the scope of the present application, that is, the present application is not limited to the described embodiments.

In the description of the present application, it should be noted that terms such as "upper", "lower", "left", "right", "inner", and "outer" indicating orientation or positional relationships are used only for convenience of describing the present application and simplifying the description, and do not indicate or imply that the referred device or element must have a specific orientation, be constructed, or operate in a specific orientation, and thus should not be construed as limiting the present application. Additionally, terms such as "first", "second", and "third" are used for descriptive purposes only and should not be construed as indicating or implying relative importance. "Vertical" is not strictly vertical but within the allowable range of error. "Parallel" is not strictly parallel but within the allowable range of error. All technical and scientific terms used in the present application have the same meaning as commonly understood by those skilled in the technical field of the present application; the terms used in the specification of the present application are for the purpose of describing specific embodiments only and are not intended to limit the present application; the terms "including" and "having" in the specification, claims, and the above description of the drawings of the present application, as well as any variations thereof, are intended to cover non-exclusive inclusion.

The orientation terms appearing in the following description refer to the directions shown in the drawings and do not limit the specific structure of the present application. In the description of the present application, it should also be noted that, unless otherwise expressly specified and limited, the terms "mounted", "connected", and "connection" should be understood broadly, for example, as fixed connections, detachable connections, or integral connections; they may be direct connections or indirect connections through an intermediate medium. For those of ordinary skill in the art, the specific meanings of the above terms in the present application can be understood based on specific circumstances.

Reference to an "embodiment" in the present application means that a particular feature, structure, or characteristic described in connection with the embodiment may be included in at least one embodiment of the present application. The appearance of the phrase in various places in the specification does not necessarily refer to the same embodiment, nor is it an independent or alternative embodiment mutually exclusive with other embodiments. Those skilled in the art explicitly and implicitly understand that the embodiments described in the present application may be combined with other embodiments.

The term "and/or" in the present application is merely an association relationship describing associated objects, indicating that three relationships may exist; for example, A and/or B may indicate: A alone, both A and B, and B alone. Additionally, the character "/" in the present application generally indicates that the associated objects before and after are in an "or" relationship.

The term "plurality" appearing in the present application refers to two or more (including two); similarly, "multiple groups" refers to two or more groups (including two groups), and "multiple pieces" refers to two or more pieces (including two pieces).

In the embodiments of the present application, the same reference numerals denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are for illustrative purposes only and should not constitute any limitation to the present application.

In the present application, the battery cell may include a lithium-ion secondary battery, a lithium-ion primary battery, a lithium-sulfur battery, a sodium-lithium-ion battery, a sodium-ion battery, a lithium metal battery, or a magnesium-ion battery, and the like, which is not limited by the embodiments of the present application. The battery cell may be cylindrical, flat, rectangular, or in other shapes, which is not limited by the embodiments of the present application. Battery cells are generally classified into three types based on packaging methods: cylindrical battery cells, prismatic battery cells, and pouch battery cells, which are not limited by the embodiments of the present application.

The battery mentioned in the embodiments of the present application refers to a single physical module including one or more battery cells to provide higher voltage and capacity. For example, the battery mentioned in the present application may include a battery module, a battery pack, or an energy storage device, and the like. The battery generally includes a box for encapsulating one or more battery cells. The box can prevent liquids or other foreign objects from affecting the charging or discharging of the battery cells.

The battery cell includes an electrode assembly and an electrolyte, the electrode assembly being composed of a positive electrode plate, a negative electrode plate, and a separator. The battery cell operates mainly by the movement of metal ions between the positive electrode plate and the negative electrode plate. The positive electrode plate includes a positive electrode current collector and a positive electrode active material layer, the positive electrode active material layer being coated on the surface of the positive electrode current collector, and the positive electrode current collector not coated with the positive electrode active material layer protrudes from the positive electrode current collector coated with the positive electrode active material layer, serving as a positive electrode tab. For a lithium-ion battery, for example, the material of the positive electrode current collector may be aluminum, and the positive electrode active material may be lithium cobalt oxide, lithium iron phosphate, ternary lithium, or lithium manganate, and the like. The negative electrode plate includes a negative electrode current collector and a negative electrode active material layer, the negative electrode active material layer being coated on the surface of the negative electrode current collector, and the negative electrode current collector not coated with the negative electrode active material layer protrudes from the negative electrode current collector coated with the negative electrode active material layer, serving as a negative electrode tab. The material of the negative electrode current collector may be copper, and the negative electrode active material may be carbon, silicon, lithium metal, or lithium alloy, and the like. To ensure that large currents can pass without fusing, multiple positive electrode tabs are stacked together, and multiple negative electrode tabs are stacked together. The material of the separator may be polypropylene (polypropylene, PP) or polyethylene (polyethylene, PE), and the like. Additionally, the electrode assembly in the embodiments of the present application includes, but is not limited to, a wound structure or a stacked structure.

In the production process of battery cells, it is typically necessary to assemble the casing and the end cap of the battery to achieve sealing of battery cells. However, in the actual assembly process, due to the weight of the end cap, the central region of the end cap placed on the casing may sag downward under the action of gravity, causing the edge regions of the end cap to tilt upward. In this case, the edge of the end cap and the edge of the casing are difficult to fit well together, making it challenging to connect them with high connection quality, thereby significantly reducing the pass rate of assembly. This issue is particularly pronounced when the thickness of the end cap is less than or equal to 0.3 mm and the length is greater than or equal to 500 mm, where the bending deformation of the end cap is more severe, making it even more difficult for the end cap and the casing to achieve good fit.

In view of this, embodiments of the present application provide a battery cell, where the end cap of the battery cell is provided with a first protrusion, and an insulating member inside the battery cell is provided with a first groove, the first protrusion and the first groove cooperating with each other to restrict deformation of the end cap due to its own weight during the assembly of the end cap with the casing, improving the fit between the edge of the end cap and the casing, thereby improving the pass rate of assembly of the battery cell.

The technical solutions described in the embodiments of the present application are applicable to various electric apparatuses using batteries. The electric apparatus may be a vehicle, a mobile phone, a portable device, a laptop computer, a ship, a spacecraft, an electric toy, or an electric tool, and the like. The vehicle may be a fuel vehicle, a gas vehicle, or a new energy vehicle, where the new energy vehicle may be a pure electric vehicle, a hybrid electric vehicle, or an extended-range vehicle, and the like; the spacecraft includes an airplane, a rocket, a space shuttle, a spaceship, and the like; the electric toy includes a fixed or mobile electric toy, such as a game console, an electric car toy, an electric ship toy, or an electric airplane toy, and the like; the electric tool includes a metal cutting electric tool, a grinding electric tool, an assembly electric tool, or a railway electric tool, such as an electric drill, an electric grinder, an electric wrench, an electric screwdriver, an electric hammer, an impact drill, a concrete vibrator, or an electric planer, and the like. The embodiments of the present application are not limited to the above electric apparatuses.

For convenience of explanation, the following embodiments take the electric apparatus as a vehicle as an example.

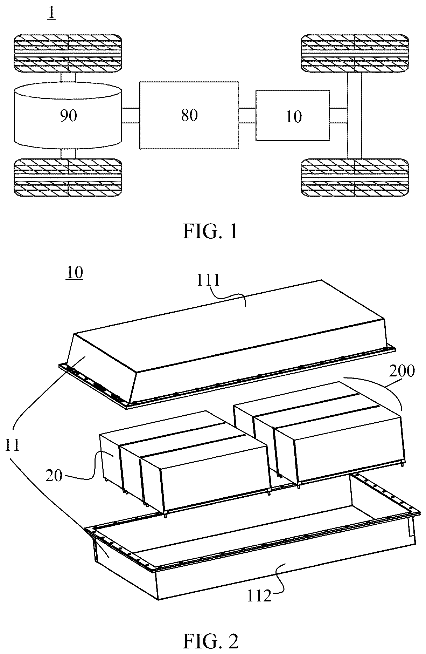

As shown in FIG. 1, a schematic structural diagram of a vehicle 1 according to an embodiment of the present application is provided. The vehicle 1 may be a fuel vehicle, a gas vehicle, or a new energy vehicle, where the new energy vehicle may be a pure electric vehicle, a hybrid electric vehicle, or an extended-range vehicle, etc. The interior of the vehicle 1 may be provided with a motor 90, a controller 80, and a battery 10, the controller 80 being configured to control the battery 10 to supply power to the motor 90. For example, the battery 10 may be disposed at the bottom, front, or rear of the vehicle 1. The battery 10 may be used to supply power to the vehicle 1, for example, as an operating power source for the vehicle 1, used for the circuit system of the vehicle 1, such as for the starting, navigation, and operational power needs during operation of the vehicle 1. In another embodiment of the present application, the battery 10 may not only serve as an operating power source for the vehicle 1 but also as a driving power source for the vehicle 1, replacing or partially replacing fuel or natural gas to provide driving power for the vehicle 1.

To meet different power requirements, the battery may include multiple battery cells, where the multiple battery cells may be connected in series, parallel, or a combination thereof, the combination referring to a mix of series and parallel connections. The battery may also be referred to as a battery pack. Optionally, multiple battery cells may first be connected in series, parallel, or a combination thereof to form a battery module, and multiple battery modules may then be connected in series, parallel, or a combination thereof to form the battery. That is, multiple battery cells may directly form the battery, or they may first form battery modules, which then form the battery.

For example, FIG. 2 shows a schematic structural diagram of a battery 10 according to an embodiment of the present application, where the battery 10 may include at least one battery module 200. The battery module 200 includes multiple battery cells 20. The battery 10 may also include a box 11, the interior of the box 11 being a hollow structure, with multiple battery cells 20 accommodated within the box 11. FIG. 2 shows one possible implementation of the box 11 according to an embodiment of the present application. As shown in FIG. 2, the box 11 may include two parts, referred to here as a first part 111 and a second part 112, which are fastened together. The shapes of the first part 111 and the second part 112 may be determined based on the combined shape of the battery module 200, with at least one of the first part 111 and the second part 112 having an opening. For example, as shown in FIG. 2, both the first part 111 and the second part 112 may be hollow rectangular prisms, each with only one face as an open face, the opening of the first part 111 and the opening of the second part 112 being oppositely disposed, and the first part 111 and the second part 112 being fastened together to form a box 11 with a closed chamber.

For another example, unlike what is shown in FIG. 2, one of the first part 111 and the second part 112 may be a hollow rectangular prism with an opening, while the other is plate-shaped to cover the opening. For instance, taking the second part 112 as a hollow rectangular prism with only one face as an open face and the first part 111 as plate-shaped, the first part 111 covers the opening of the second part 112 to form a box 11 with a closed chamber, which can accommodate multiple battery cells 20. The multiple battery cells 20, after being connected in parallel, series, or a combination thereof, are placed within the box 11 formed by fastening the first part 111 and the second part 112 together.

Optionally, the battery 10 may also include other structures, which are not described in detail here. For example, the battery 10 may also include a busbar component, which is used to achieve electrical connection between multiple battery cells 20, such as parallel, series, or a combination thereof. Specifically, the busbar component may achieve electrical connection between the battery cells 20 by connecting to the electrode terminals of the battery cells 20. Further, the busbar component may be fixed to the electrode terminals of the battery cells 20 by welding. The electric energy of the multiple battery cells 20 may be further drawn out through a conductive structure passing through the box 11.

Depending on different power requirements, the number of battery cells 20 in the battery module 200 can be set to any value. Multiple battery cells 20 may be connected in series, parallel, or a combination thereof to achieve greater capacity or power. Since the number of battery cells 20 included in each battery 10 may be large, for ease of installation, the battery cells 20 are grouped, with each group of battery cells 20 forming a battery module 200. The number of battery cells 20 included in the battery module 200 is not limited and can be set according to requirements. The battery 10 may include multiple battery modules 200, which may be connected in series, parallel, or a combination thereof.

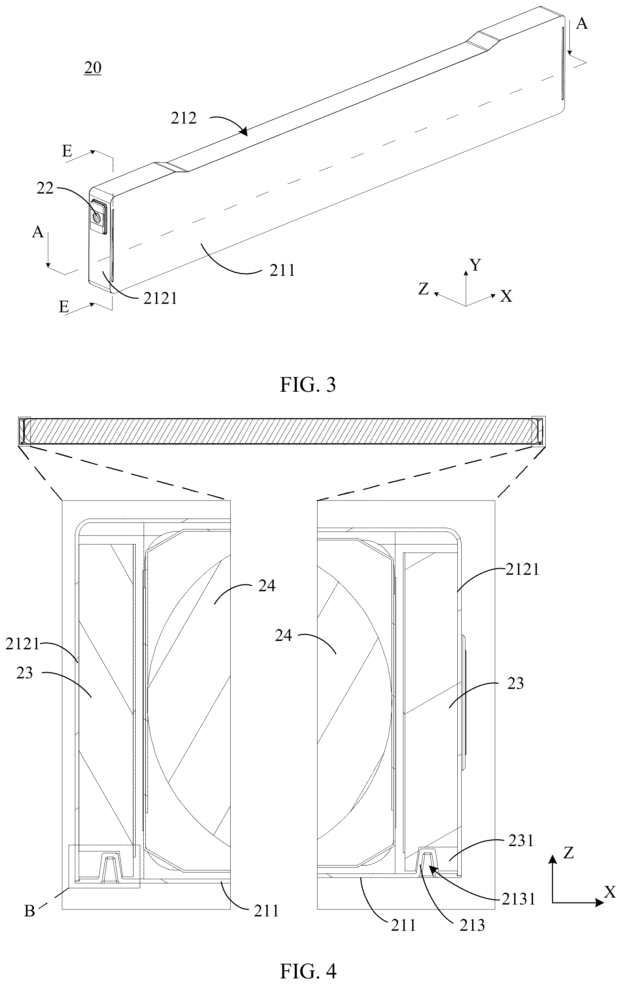

FIG. 3 shows a battery cell 20 provided by an embodiment of the present application, and FIG. 4 is a cross-sectional view of the battery cell 20 in FIG. 3 along an A-A direction. As shown in FIGs. 3 and 4, the battery cell 20 includes a casing 212, an end cap 211, and an insulating member 23.

The casing 212 has an opening, and the end cap 211 closes the opening of the casing 212. The insulating member 23 is disposed within the casing 212, where one of the insulating member 23 and the end cap 211 is provided with a first groove 231, and the other thereof is provided with a first protrusion 213, the first groove 231 and the first protrusion 213 cooperating with each other.

The casing 212 of the battery cell 20 may be a hollow structure with an opening, used to accommodate structures such as an electrode assembly 24. The shape of the casing 212 may be determined based on the combined shape of one or more electrode assemblies 24, for example, the casing 212 may be a hollow rectangular prism, cube, or cylinder, with one face of the casing 212 having an opening to allow one or more electrode assemblies 24 to be placed within the casing 212. For instance, when the casing 212 is a hollow rectangular prism or cube, one plane of the casing 212 is an open face, meaning that the plane has no wall, allowing communication between the interior and exterior of the casing 212. When the casing 212 is a hollow cylinder, an end face of the casing 212 is an open face, meaning that the end face has no wall, allowing communication between the interior and exterior of the casing 212. In some battery cells 20, the casing 212 may also be a hollow structure with openings at two ends.

The end cap 211 may be used to cover the opening and connect with the casing 212. In some embodiments, the end cap 211 may be sealedly connected with the casing 212 to form a closed cavity for accommodating the electrode assembly 24, and the cavity may be filled with an electrolyte, such as an electrolytic solution.

The insulating member 23 is disposed inside the battery cell 20 to achieve insulation between the housing of the battery cell 20 and the electrode assembly 24, where the housing of the battery cell 20 may include the end cap 211 and the casing 212. In some embodiments, the insulating member 23 is provided with the first groove 231, and the end cap 211 is provided with the first protrusion 213, the first groove 231 and the first protrusion 213 cooperating with each other. Specifically, the first groove 231 may be recessed from a surface of the insulating member 23 facing the end cap 211 in a direction away from the end cap 211, and the first protrusion 213 may protrude from a surface of the end cap 211 facing the insulating member 23 toward the insulating member 23. In some embodiments, the insulating member 23 is provided with the first protrusion 213, and the end cap 211 is provided with the first groove 231, the first groove 231 and the first protrusion 213 similarly cooperating with each other. Specifically, the first protrusion 213 may protrude from a surface of the insulating member 23 facing the end cap 211 toward the end cap 211, and the first groove 231 may be recessed from a surface of the end cap 211 facing the insulating member 23 in a direction away from the insulating member 23. In one possible implementation, the first groove 231 may form a protrusion on a surface of the end cap 211 facing away from the insulating member 23; in another possible implementation, a thickness of the end cap 211 is sufficient to provide space for forming the first groove 231. The first protrusion 213 may be a structure separate from the end cap 211 or the insulating member 23, attached to the end cap 211 or the insulating member 23 by means such as adhesion or welding; optionally, the first protrusion 213 may be a structure integrally formed with the end cap 211 or the insulating member 23; optionally, the first protrusion 213 may also be a structure formed by stamping the end cap 211 or the insulating member 23.

In the embodiments of the present application, the insulating member 23 may be disposed opposite to the end cap 211, and the first groove 231 and the first protrusion 213 may cooperate with each other in a direction in which the insulating member 23 and the end cap 211 are oppositely disposed. At least a portion of the first protrusion 213 is accommodated in the first groove 231, and at least one sidewall 2121 of the first protrusion 213 abuts against a corresponding sidewall 2121 of the first groove 231, so that the sidewall 2121 of the first groove 231 abutting against the first protrusion 213 can restrict the relative movement of the end cap 211 and the casing 212. Specifically, during the assembly process of the battery cell 20, the end cap 211 placed on the casing 212 tends to bend toward a center of the end cap 211 due to its own weight, with the center of the end cap 211 tending to deform in the direction of gravity, and edges of the end cap 211 tending to move closer to the center. The cooperation between the first protrusion 213 and the first groove 231 can restrict the movement of the edges of the end cap 211 toward the center, and the bending deformation of the end cap 211 is correspondingly restricted, thereby improving the fit between the end cap 211 and the casing 212.

In the battery cell 20 provided by the embodiments of the present application, the first protrusion 213 and the first groove 231 cooperate with each other inside the battery cell 20, restricting deformation of the end cap 211 due to its own weight, thereby reducing gaps between the end cap 211 and the casing 212 caused by bending deformation of the end cap 211, and improving the pass rate of assembly during the process of assembling the end cap 211 with the casing 212.

According to some embodiments of the present application, the first protrusion 213 includes a plurality of first protrusions 213, the plurality of first protrusions 213 being distributed at two ends of the battery cell 20 along a length direction X of the battery cell 20, where a dimension of the battery cell 20 in the length direction X is greater than a dimension of the battery cell 20 in a width direction Y, and the dimension of the battery cell 20 in the width direction Y is greater than a dimension of the battery cell 20 in a thickness direction Z.

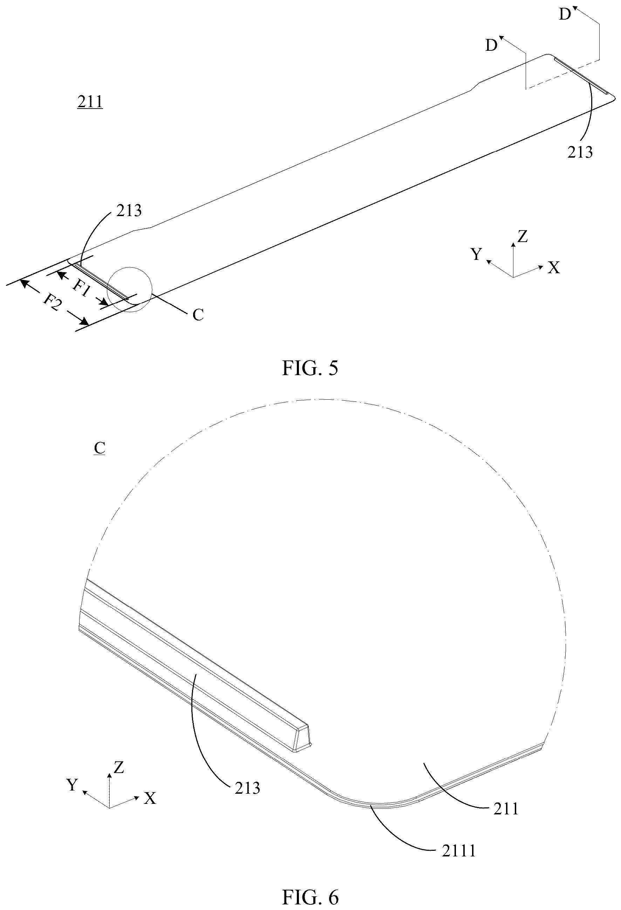

Taking the first protrusion 213 being disposed on the end cap 211 and the first groove 231 being disposed on the insulating member 23 as an example, FIG. 5 is a schematic structural diagram of an end cap 211 of a battery cell 20 provided by an embodiment of the present application, and FIG. 6 is an enlarged schematic structural diagram of part C in FIG. 5. Here, FIGs. 5 and 6 show the structure of the side of the end cap 211 facing the interior of the battery cell 20. It should be understood that the embodiments of the present application can also be applied to cases where the first protrusion 213 is disposed on the insulating member 23 and the first groove 231 is disposed on the end cap 211.

The length direction X of the battery cell 20 refers to the direction indicated by a longest side of the battery cell 20, the thickness direction Z of the battery cell 20 refers to the direction indicated by a shortest side of the battery cell 20, and the width direction Y of the battery cell 20 refers to the direction indicated by a side of the battery cell 20 whose length is between the longest side and the shortest side. That is, the dimension of the battery cell 20 in the length direction X is greater than the dimension of the battery cell 20 in the width direction Y, and the dimension of the battery cell 20 in the width direction Y is greater than the dimension of the battery cell 20 in the thickness direction Z.

In some embodiments, the interior of the battery cell 20 may be provided with multiple first protrusions 213, the multiple first protrusions 213 being distributed at two ends of the battery cell 20 along the length direction X of the battery cell 20. For example, the multiple first protrusions 213 may be distributed in a surrounding area of the edges of the end cap 211 arranged along the length direction X of the battery cell 20. Specifically, there may be a certain distance between the first protrusion 213 and the edge of the end cap 211. For another example, the interior of the battery cell 20 may be provided with multiple insulating members 23, and the multiple first protrusions 213 may be respectively located on the insulating members 23 arranged at two ends along the length direction X of the battery cell 20.

In some embodiments, the positions of the first protrusions 213 or the first grooves 231 on the end cap 211 are related to the positions of the insulating members 23 relative to the end cap 211. For example, if the battery cell 20 is provided with two insulating members 23, respectively located at two ends along the length direction X of the battery cell 20, the positions of the first protrusions 213 and the first grooves 231 correspond to the positions of the insulating members 23, that is, they cooperate with each other at two ends of the battery cell 20 in the length direction X and are disposed at two ends along the length direction X of the battery cell 20. Optionally, two first grooves 231 or first protrusions 213 may be disposed on a same insulating member 23, respectively located at two ends of the battery cell 20 in the length direction X, cooperating with the first protrusions 213 or the first grooves 231 on the end cap 211.

In some embodiments, multiple first protrusions 213 may all be disposed on the insulating member 23, or multiple first protrusions 213 may all be disposed on the end cap 211. In some embodiments, multiple first protrusions 213 may be respectively disposed on the insulating member 23 and the end cap 211, that is, the insulating member 23 may be provided with both the first protrusion 213 and the first groove 231, and the end cap 211 may also be provided with both the first protrusion 213 and the first groove 231.

In some embodiments, multiple first protrusions 213 may be symmetrically disposed in the length direction X of the battery cell 20. In some embodiments, one of the two ends in the length direction X of the battery cell 20 may be provided with multiple first protrusions 213, specifically, the multiple first protrusions 213 may be arranged along the width direction of the end cap 211 or along the length direction of the end cap 211.

When the length of the end cap 211 is much greater than its width and thickness, for example, when the thickness of the end cap 211 is less than or equal to 0.3 mm and the length is greater than or equal to 500 mm, the end cap 211 may deform in the central region toward the direction of gravity due to its own weight, and the edge regions of the end cap 211 may correspondingly tilt upward in the direction opposite to gravity, resulting in an excessively large gap between the edge region of the end cap 211 and the edge region of the casing 212, making it difficult to connect the end cap 211 and the casing 212 with good fit.

Therefore, providing the first protrusions 213 at two ends of the battery cell 20 in the length direction X can provide support points for the end cap 211 at its edge regions, such that when the end cap 211 has a tendency to bend toward its central region, the interaction between the sidewalls of the first protrusion 213 and the sidewalls of the first groove 231 restricts the deformation of the end cap 211, thereby reducing gaps between the end cap 211 and the casing 212 caused by bending deformation of the end cap 211, and improving the pass rate of assembly during the process of assembling the end cap 211 with the casing 212.

According to some embodiments of the present application, a ratio of a dimension of the first protrusion 213 in the width direction Y of the battery cell 20 to the dimension of the battery cell 20 in the width direction is F, where F satisfies 30% ≤ F ≤ 90%, the dimension of the battery cell 20 in the length direction X is greater than the dimension of the battery cell 20 in the width direction Y, and the dimension of the battery cell 20 in the width direction Y is greater than the dimension of the battery cell 20 in the thickness direction Z.

Taking FIGs. 5 and 6 as an example, the first protrusion 213 may be an elongated protrusion, specifically, an elongated protrusion extending along the width direction Y of the battery cell 20. Correspondingly, the first groove 231 may also extend along the width direction Y of the battery cell 20, forming an elongated groove to match the shape of the first protrusion 213.

In some embodiments, the first protrusions 213 may be spaced apart in the width direction Y of the battery cell 20, and optionally, the first grooves 231 may also correspond to the first protrusions 213, being spaced apart in the width direction Y of the battery cell 20.

In some embodiments, the dimension of the first protrusion 213 in the width direction Y of the battery cell 20 is F1, the dimension of the battery cell 20 in the width direction is F2, then F = F1/F2, and a value of F satisfies 30% ≤ F ≤ 90%.

The ratio of the dimension of the first protrusion 213 in the width direction Y of the battery cell 20 to the dimension of the battery cell 20 in the width direction satisfying the above relationship can increase a contact area between the first protrusion 213 and the first groove 231, enabling restriction of bending deformation of the end cap 211 over a larger range, making it less likely for the first protrusion 213 to slip out of the first groove 231. Additionally, this facilitates alignment of the edge of the end cap 211 with the edge of the casing 212, improving the pass rate of assembly of the end cap 211 with the casing 212.

According to some embodiments of the present application, a surface of the first protrusion 213 facing a center of the end cap 211 is an inclined surface.

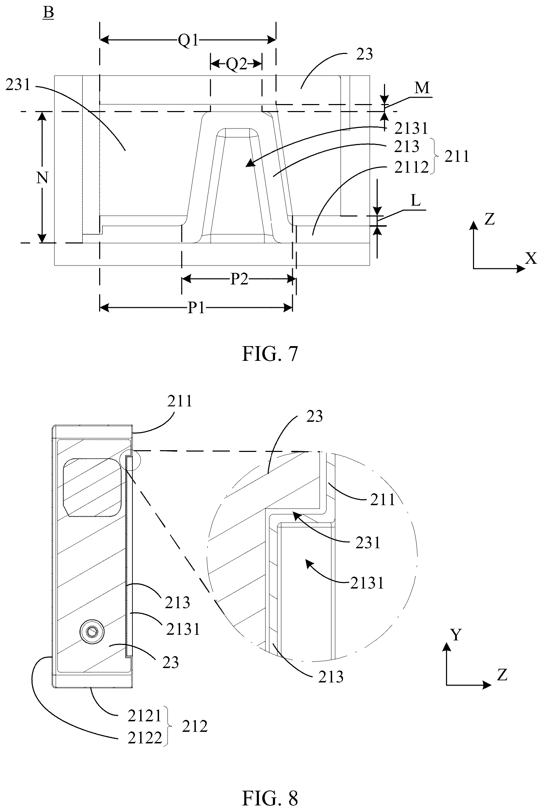

FIG. 7 is an enlarged schematic structural diagram of part B in FIG. 4. As shown in FIGs. 3 to 7, taking the first protrusion 213 being disposed on the end cap 211 as an example, the first protrusion 213 is distributed at two ends of the end cap 211 along the length direction X of the battery cell 20. At one end, the first protrusion 213 includes a surface facing the center of the end cap 211 and a surface facing away from the center of the end cap 211. The surface of the first protrusion 213 facing the center of the end cap 211 also faces the first protrusion 213 at another end of the end cap 211 in the length direction X of the battery cell 20. In some embodiments, the surface of the first protrusion 213 facing the center of the end cap 211 is an inclined surface, specifically, the inclined surface may incline from the surface of the end cap 211 facing the interior of the battery cell 20 in a direction away from the center of the end cap 211. It should be understood that when the first protrusion 213 is disposed on the insulating member 23, the surface of the first protrusion 213 facing the center of the end cap 211 may also be an inclined surface, inclining from the surface of the insulating member 23 facing the end cap 211 in a direction away from the center of the end cap 211.

In some embodiments, an inner surface of the first groove 231 cooperating with the inclined surface of the first protrusion 213 may also be an inclined surface, allowing the two to closely fit during assembly.

The inclined surface on the first protrusion 213 enables the first protrusion 213 to more easily enter the first groove 231, reducing the difficulty of cooperation between the first protrusion 213 and the first groove 231, and improving assembly efficiency.

According to some embodiments of the present application, optionally, a projection of the first protrusion 213 in the width direction Y of the battery cell 20 is trapezoidal. The dimension of the battery cell 20 in the length direction X is greater than the dimension of the battery cell 20 in the width direction Y and the dimension of the battery cell 20 in the width direction Y is greater than the dimension of the battery cell 20 in the thickness direction Z.

As shown in FIGs. 3 to 7, the projection of the first protrusion 213 in the width direction Y of the battery cell 20 is substantially trapezoidal. In some embodiments, a connection between two adjacent walls of the first protrusion 213 may be rounded, so the projection of the first protrusion 213 may be a trapezoid with two adjacent sides connected by rounded corners. In some embodiments, one of the surface of the first protrusion 213 facing the center of the end cap 211 and a surface facing away from the center of the end cap 211 may be an inclined surface, or both may be inclined surfaces.

In the thickness direction Z of the battery cell 20, an upper base of the trapezoid shown in the projection of the first protrusion 213 is located at an end away from the end cap 211, and a lower base of the trapezoid is located at an end close to the end cap 211. Here, the upper base of the trapezoid is the shorter of the two parallel sides, and the lower base of the trapezoid is the longer of the two parallel sides. That is, as shown in FIG. 7, a dimension of the first protrusion 213 at the end close to the end cap 211 in the thickness direction of the end cap 211 in the length direction of the end cap 211 is P2, and the dimension of the first protrusion 213 at the end away from the end cap 211 in the thickness direction of the end cap 211 in the length direction of the end cap 211 is Q2, where P2 > Q2. Correspondingly, a dimension of an opening of the first groove 231 in the thickness direction of the end cap 211 in the length direction of the end cap 211 is P1, and a dimension of a bottom wall of the first groove 231 in the length direction of the end cap 211 is Q1, where P1 > Q1.

During the assembly of the end cap 211 with the casing 212 of the battery cell 20, the trapezoidal structure enables the first protrusion 213 to more easily enter the first groove 231, reducing the difficulty of cooperation between the first protrusion 213 and the first groove 231, and improving assembly efficiency.

According to some embodiments of the present application, a surface where the first groove 231 cooperates with the first protrusion 213 is an inclined surface.

In some embodiments, a shape of the first groove 231 may be the same as a shape of the first protrusion 213, and the first groove 231 may have an opening only in the thickness direction Z of the battery cell 20. Optionally, the first groove 231 may have openings in both the thickness direction Z and the length direction X of the battery cell 20, where the opening in the length direction X of the battery cell 20 faces away from the central region of the end cap 211.

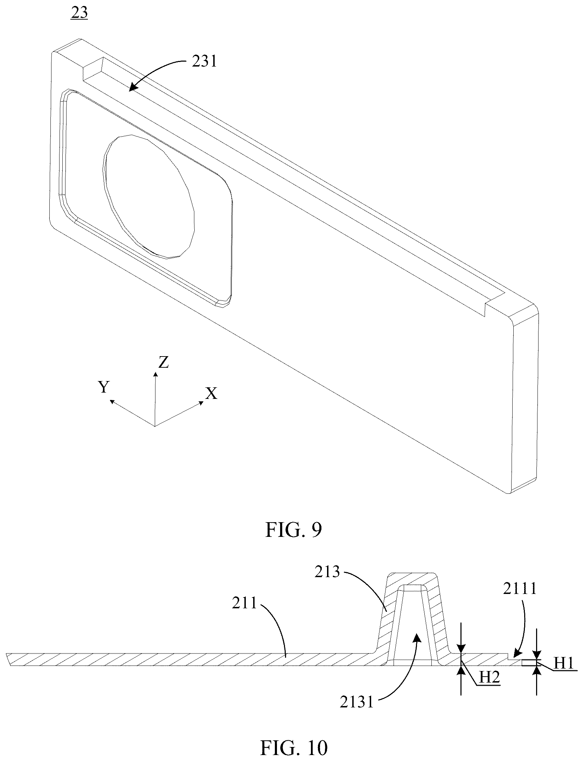

FIG. 8 is a cross-sectional view of the battery cell 20 in FIG. 3 along an E-E direction, and FIG. 9 is a schematic structural diagram of an insulating member 23 provided by an embodiment of the present application. Taking the first groove 231 being disposed on the insulating member 23 as an example, as shown in FIGs. 3 to 9, the first groove 231 is disposed on the surface of the insulating member 23 facing the end cap 211, that is, the first groove 231 is recessed from the surface of the insulating member 23 facing the end cap 211 in the thickness direction Z of the battery cell 20. In some embodiments, the direction of recession of the first groove 231 is the same as the direction of protrusion of the first protrusion 213. It should be understood that the first groove 231 may also be disposed on the end cap 211, recessed from the surface of the end cap 211 facing the interior of the battery cell 20 toward the direction of the end cap 211.

At least one sidewall 2121 of the first protrusion 213 may have an inclined surface, for example, the sidewall 2121 of the first protrusion 213 in contact with the first groove 231 in the length direction X of the battery cell 20 is an inclined surface, and correspondingly, the sidewall 2121 of the first groove 231 in contact with the first protrusion 213 in the length direction X of the battery cell 20 may also be an inclined surface, with the inclined surfaces of both fitting closely together. Optionally, the contact surfaces of the first protrusion 213 and the first groove 231 in the width direction Y of the battery cell 20 may also be inclined surfaces that fit closely together.

In some embodiments, in the length direction X of the battery cell 20, the sidewall 2121 of the first protrusion 213 closer to the central region of the battery cell 20 is an inclined surface, and correspondingly, the sidewall 2121 of the first groove 231 closer to the central region of the end cap 211 is an inclined surface. In this case, the first groove 231 may have a sidewall 2121 only on the side closer to the central region of the end cap 211, and the first groove 231 may not have a sidewall 2121 at least at one of the two ends in the width direction Y of the battery cell 20, and optionally, the first groove 231 may also not have a sidewall 2121 on the side of the first protrusion 213 facing away from the central region of the end cap 211. Having fewer sidewalls for the first groove 231 facilitates the processing of the first groove 231 and reduces the precision required for processing the first groove 231, thereby reducing the possibility of the first protrusion 213 being difficult to accommodate in the first groove 231 due to processing errors.

During the assembly of the end cap 211 with the casing 212 of the battery cell 20, the inclined surface of the trapezoid facilitates guiding the first protrusion 213 into the first groove 231, reducing the precision required for aligning the first protrusion 213 with the first groove 231. The inclined surface in the length direction of the end cap 211 facilitates restricting the bending deformation of the end cap 211 under gravity, enabling reduction of the gap between two ends of the end cap 211 in the length direction and the edge region of the casing 212, and improving the pass rate of assembly of the battery cell 20.

According to some embodiments of the present application, the end cap 211 includes a main body portion 2112 and the first protrusion 213, the first protrusion 213 being disposed on a surface of the main body portion 2112 facing an interior of the battery cell 20, with a first gap between the insulating member 23 and the main body portion 2112; or, the insulating member 23 includes a main body portion and the first protrusion 213, the first protrusion 213 being disposed on a surface of the main body portion facing the end cap 211, with a first gap between the main body portion and the end cap 211.

In some embodiments, the first protrusion 213 is disposed on the end cap 211, and the first groove 231 is disposed on the insulating member 23. As shown in FIGs. 7 to 9, the first protrusion 213 is disposed on the main body portion 2112 of the end cap 211, the main body portion 2112 referring to the portion of the end cap 211 not provided with the first protrusion 213, which may be approximated as a flat plate. The first gap may be the gap between the surface of the main body portion 2112 facing the interior of the battery cell 20 and the surface of the insulating member 23 facing the end cap 211, as shown by L in FIG. 7, which represents the first gap.

In some embodiments, the first protrusion 213 is disposed on the insulating member 23, and the first groove 231 is disposed on the end cap 211. Here, the first protrusion 213 is disposed on the main body portion of the insulating member 23, the main body portion referring to the portion of the insulating member 23 not provided with the first protrusion 213. The first gap may be the gap between the surface of the main body portion of the insulating member 23 facing the end cap 211 and the surface of the end cap 211 facing the interior of the battery cell 20.

Considering that both the insulating member 23 and the end cap 211 may have manufacturing tolerances, the first gap can minimize interference between the insulating member 23 and the end cap 211, facilitating improvement of the fit between the end cap 211 and the casing 212, thereby improving the pass rate of assembly of the battery cell 20.

According to some embodiments of the present application, a dimension of the first gap in the thickness direction Z of the battery cell 20 is L, where L satisfies 0.05 mm ≤ L ≤ 0.5 mm, the dimension of the battery cell 20 in the length direction X is greater than the dimension of the battery cell 20 in the width direction Y, and the dimension of the battery cell 20 in the width direction Y is greater than the dimension of the battery cell 20 in the thickness direction Z.

Taking the first protrusion 213 being disposed on the end cap 211 and the first groove 231 being disposed on the insulating member 23 as an example, the dimension of the first gap may be L as shown in FIG. 7, where L satisfies 0.05 mm ≤ L ≤ 0.5 mm, allowing sufficient space between the end cap 211 and the insulating member 23 to accommodate manufacturing tolerances of the end cap 211 and the insulating member 23, reducing the likelihood of interference between the insulating member 23 and the end cap 211, and improving the fit between the end cap 211 and the casing 212. Additionally, the first gap within this range can ensure that the space between the insulating member 23 and the end cap 211 is appropriately sized, maximizing the compactness of the internal structure arrangement of the battery cell 20. It should be understood that when the first protrusion 213 is disposed on the insulating member 23 and the first groove 231 is disposed on the end cap 211, the dimension of the first gap may also satisfy the above range.

According to some embodiments of the present application, a second gap exists between a top wall of the first protrusion 213 and a bottom wall of the first groove 231.

Taking the first protrusion 213 being disposed on the end cap 211 and the first groove 231 being disposed on the insulating member 23 as an example, the top wall of the first protrusion 213 refers to the wall of the first protrusion 213 farthest from the end cap 211 in the thickness direction of the end cap 211, and the second gap refers to the gap between the top wall of the first protrusion 213 and the bottom wall of the first groove 231. As shown in FIG. 7, the second gap may be M as shown in FIG. 7. It should be understood that when the first protrusion 213 is disposed on the insulating member 23 and the first groove 231 is disposed on the end cap 211, there may also be a second gap between the top wall of the first protrusion 213 and the bottom wall of the first groove 231.

Considering that both the insulating member 23 and the first protrusion 213 may have manufacturing tolerances, the second gap can minimize interference between the insulating member 23 and the first protrusion 213, reducing the likelihood that the first protrusion 213 abuts against the insulating member 23, which could make it difficult for the end cap 211 and the casing 212 to fit together, thereby facilitating improvement of the fit between the end cap 211 and the casing 212, and improving the pass rate of assembly of the battery cell 20.

According to some embodiments of the present application, a dimension of the second gap in the thickness direction Z of the battery cell 20 is M, where M satisfies 0.05 mm ≤ M ≤ 0.5 mm, the dimension of the battery cell 20 in the length direction X is greater than the dimension of the battery cell 20 in the width direction Y, and the dimension of the battery cell 20 in the width direction Y is greater than the dimension of the battery cell 20 in the thickness direction Z.

Taking the first protrusion 213 being disposed on the end cap 211 and the first groove 231 being disposed on the insulating member 23 as an example, the dimension of the second gap refers to a distance in the thickness direction Z of the battery cell 20 between a surface of the top wall of the first protrusion 213 facing the insulating member 23 and a surface of the insulating member 23 facing the top wall of the first protrusion 213. The dimension M of the second gap satisfies 0.05 mm ≤ M ≤ 0.5 mm, allowing sufficient space between the first protrusion 213 and the insulating member 23 to accommodate manufacturing tolerances of the first protrusion 213 and the insulating member 23, reducing the likelihood of interference between the insulating member 23 and the first protrusion 213, and improving the fit between the end cap 211 and the casing 212. Additionally, the first gap within this range can enable the insulating member 23 to provide insulation over as large an area as possible, reducing the possibility of the end cap 211 and the casing 212 of the battery cell 20 becoming electrically charged. It should be understood that when the first protrusion 213 is disposed on the insulating member 23 and the first groove 231 is disposed on the end cap 211, the dimension of the second gap may also satisfy the above range.

According to some embodiments of the present application, the end cap 211 includes a main body portion 2112 and the first protrusion 213, the first protrusion 213 being disposed on the surface of the main body portion 2112 facing the interior of the battery cell 20, where a distance between the top wall of the first protrusion 213 and a surface of the main body portion 2112 facing away from the interior of the battery cell 20 is N, where N satisfies 0.3 mm ≤ N ≤ 1.5 mm.

When the first protrusion 213 is disposed on the end cap 211, the distance between the top wall of the first protrusion 213 and the end cap 211 in the thickness direction Z of the battery cell 20 refers to the distance between the surface of the top wall of the first protrusion 213 facing away from the end cap 211 and the surface of the main body portion 2112 facing away from the interior of the battery cell 20. This distance is represented by N as shown in FIG. 7, where N satisfies 0.3 mm ≤ N ≤ 1.5 mm.

This enables good cooperation between the first protrusion 213 and the first groove 231, enhancing the effect of the first protrusion 213 in restricting movement of the end cap 211 toward its center, thereby reducing gaps between the end cap 211 and the casing 212 due to bending deformation of the end cap 211, and improving the pass rate of assembly during the process of assembling the end cap 211 with the casing 212.

According to some embodiments of the present application, a dimension of the first groove 231 in the length direction X of the battery cell 20 is greater than a dimension of the first protrusion 213 in the length direction X of the battery cell 20, where the dimension of the battery cell 20 in the length direction X is greater than the dimension of the battery cell 20 in the width direction Y, and the dimension of the battery cell 20 in the width direction Y is greater than the dimension of the battery cell 20 in the thickness direction Z; and/or, a dimension of the first groove 231 in the width direction Y of the battery cell 20 is greater than the dimension of the first protrusion 213 in the width direction Y of the battery cell 20, where the dimension of the battery cell 20 in the length direction X is greater than the dimension of the battery cell 20 in the width direction Y and the dimension of the battery cell 20 in the width direction Y is greater than the dimension of the battery cell 20 in the thickness direction Z.

As shown in FIG. 7, at least a portion of the first protrusion 213 is accommodated in the first groove 231. In a same plane perpendicular to the width direction Y of the battery cell 20, a dimension of the first groove 231 along the length direction of the end cap 211 is greater than a dimension of the first protrusion 213 along the length direction of the end cap 211. In some embodiments, in a same plane perpendicular to the length direction X of the battery cell 20, a dimension of the first groove 231 along the width direction Y of the battery cell 20 is greater than a dimension of the first protrusion 213 along the width direction Y of the battery cell 20. In some embodiments, the dimensions of the first groove 231 in the length direction X and the width direction of the battery cell 20 are respectively greater than the dimensions of the first protrusion 213 in the length direction X and the width direction of the battery cell 20. That is, the accommodating space enclosed by the first groove 231 has a volume greater than the volume required by the first protrusion 213, with at least a portion of the space in the first groove 231 not accommodating the first protrusion 213.

This allows the first protrusion 213 to be more easily accommodated in the first groove 231 during the assembly process of the battery cell 20, thereby improving the assembly efficiency of the battery cell 20.

According to some embodiments of the present application, an edge of the end cap 211 has a first stepped structure 2111, the first stepped structure 2111 overlapping the casing 212, where a ratio of a height of the first stepped structure 2111 to a thickness of the end cap 211 is G, where G satisfies 40% ≤ G ≤ 60%.

FIG. 10 is a schematic cross-sectional structural diagram of the end cap 211 in FIG. 5 along a D-D direction. As shown, the edge of the end cap 211 has a first stepped structure 2111. In some embodiments, the first stepped structure 2111 may surround the end cap 211; optionally, the first stepped structure 2111 may be disposed at the edges of the end cap 211 arranged along the length direction; optionally, the first stepped structure 2111 may be disposed at the edges of the end cap 211 arranged along the width direction.

The first stepped structure 2111 is formed on the side of the end cap 211 facing the interior of the battery cell 20. In the first stepped structure 2111, a portion with a height difference between the upper and lower steps forms a certain accommodating space, and the first stepped structure 2111 overlaps the edge of the casing 212, with at least a portion of the edge of the casing 212 in contact with the end cap 211 being accommodated in the accommodating space. The position where the first stepped structure 2111 overlaps the edge of the casing 212 is the position where the end cap 211 is connected to the casing 212.

The first stepped structure 2111 can provide positioning for the assembly of the end cap 211 with the casing 212, improving the fit between the end cap 211 and the casing 212 during the assembly process, thereby facilitating improvement of the pass rate of the battery cell 20 during assembly.

The ratio of the height of the first stepped structure 2111 to the thickness of the end cap 211 is G, as shown in FIG. 10, where the height of the first stepped structure 2111 may be H1 as shown in FIG. 10, and the thickness of the end cap 211 may be H2 as shown in FIG. 10, then G = H1/H2. In some embodiments, G satisfies 40% ≤ G ≤ 60%. In some embodiments, G = 50%.

Satisfying this range allows the first stepped structure 2111 to provide good positioning at the edge of the casing 212, making it less likely to be misaligned under external forces; on the other hand, it also enables the first stepped structure 2111 to have sufficient strength, making it less likely to be damaged during assembly, enhancing the strength of the end cap 211, and improving the connection strength between the end cap 211 and the casing 212, thereby improving the pass rate of assembly of the battery cell 20.

According to some embodiments of the present application, the first stepped structure 2111 is welded to the casing 212.

During the assembly process of the end cap 211 with the casing 212, the first stepped structure 2111 overlaps the casing 212, and the portion of the first stepped structure 2111 overlapping the casing 212 is connected to the casing 212 by welding. In some embodiments, when the end cap 211 overlaps the casing 212, the relative positions of the casing 212 and the end cap 211 may be fixed by pressing fixtures on both sides of the battery cell 20, performing pre-welding on the casing 212 and the end cap 211, and further performing welding on the casing 212 and the end cap 211.

Welding the first stepped structure 2111 to the casing 212 can increase the connection strength between the end cap 211 and the casing 212, improving the pass rate of the battery cell 20.

According to some embodiments of the present application, the casing 212 includes a bottom wall 2122 and a sidewall 2121, the bottom wall 2122 being opposite to the opening; and the battery cell 20 includes an electrode assembly 24, the electrode assembly 24 being accommodated in a space enclosed by the bottom wall 2122 and the sidewall 2121 and the insulating member 23 being disposed between the sidewall 2121 and the electrode assembly 24.

As shown in FIGs. 3 to 8, taking the casing 212 as a hollow structure with an opening at one end as an example, the casing 212 of the battery cell 20 may include a bottom wall 2122 and a sidewall 2121, the bottom wall 2122 being opposite to the opening, and the sidewall 2121 being connected to the bottom wall 2122. The sidewall 2121 and the bottom wall 2122 of the casing 212 may enclose a space to accommodate structures such as the electrode assembly 24.

The electrode assembly 24 is a structure in the battery cell 20 for generating electric energy, disposed inside the battery cell 20, specifically, in the space enclosed by the bottom wall 2122 and the sidewall 2121 of the casing 212.

In some embodiments, the insulating member 23 is disposed between the sidewall 2121 of the casing 212 and the electrode assembly 24, and the first groove 231 on the insulating member 23 is correspondingly located between the sidewall 2121 and the electrode assembly 24, so that the first protrusion 213 on the end cap 211 is correspondingly disposed with the first groove 231, restricting the bending deformation of the end cap 211 at a position between the sidewall 2121 and the electrode assembly 24. In some embodiments, the first protrusion 213 is disposed on the insulating member 23, and the first groove 231 on the end cap 211 is correspondingly disposed with the first protrusion 213, restricting the bending deformation of the end cap 211 at a position between the sidewall 2121 and the electrode assembly 24.

The insulating member 23 being disposed between the sidewall 2121 and the electrode assembly 24 allows the first groove 231 to be located between the sidewall 2121 and the electrode assembly 24, enabling the end cap 211 to restrict bending deformation as close as possible to the casing 212, enhancing the restrictive effect of the first protrusion 213 and the first groove 231 on the bending deformation of the end cap 211.

According to some embodiments of the present application, the battery cell 20 includes an electrode terminal 22, the electrode terminal 22 being disposed on the end cap 211; or, the casing 212 includes a bottom wall 2122 and a sidewall 2121, the bottom wall 2122 being opposite to the opening, the battery cell 20 includes an electrode terminal 22, and the electrode terminal 22 is disposed on the sidewall 2121.

The electrode terminal 22 is used for electrical connection with the electrode assembly 24 to output the electric energy of the battery cell 20. The battery cell 20 typically includes at least two electrode terminals 22, and in some embodiments, the two electrode terminals 22 may be a positive electrode terminal and a negative electrode terminal, respectively. The at least two electrode terminals 22 may be disposed on the same wall or different walls of the battery cell 20. For example, the electrode terminals 22 may be disposed on the end cap 211, and the insulating member 23 is disposed opposite to the electrode terminals 22 to achieve insulation between the end cap 211 and the electrode assembly 24. Correspondingly, the first protrusion 213 and the first groove 231 cooperate with each other to restrict the bending deformation of the end cap 211. For another example, the electrode terminals 22 may be disposed on the sidewall 2121 of the casing 212, specifically, on a same sidewall 2121 or different sidewalls 2121.

In some embodiments, the electrode terminals 22 may be disposed on the same sidewall 2121. In some embodiments, the electrode terminals 22 may be disposed on different sidewalls 2121. For example, the positive electrode terminal and the negative electrode terminal may be respectively disposed on two opposing sidewalls 2121. The sidewall 2121 of the casing 212 is typically plate-shaped, and the electrode terminals 22 are fixed to the flat surface of the corresponding sidewall 2121. The insulating member 23 is disposed opposite to the electrode terminals 22 to achieve insulation between the sidewall 2121 and the electrode assembly 24. The first protrusion 213 and the first groove 231 cooperate with each other to restrict the bending deformation of the end cap 211.

The electrode terminal 22 being disposed on the end cap 211 facilitates good cooperation between the first protrusion 213 and the first groove 231, enabling fit between the end cap 211 and the casing 212, reducing gaps between the end cap 211 and the casing 212 due to bending deformation of the end cap 211, and improving the pass rate of assembly during the process of assembling the end cap 211 with the casing 212.

The electrode terminal 22 being disposed on the sidewall 2121 allows the first protrusion 213 and the first groove 231 to be as close as possible to the edge region of the end cap 211, reducing gaps between the end cap 211 and the sidewall due to bending deformation of the end cap 211 through mutual restriction between the first protrusion 213 and the first groove 231, thereby improving the pass rate of assembly of the battery cell 20.

According to some embodiments of the present application, the electrode terminal 22 is disposed on at least one sidewall 2121 arranged along a length direction X of the battery cell 20.

Inside the battery cell 20, the insulating member 23 is disposed opposite to the electrode terminal 22, that is, disposed at least at one end along the length direction of the end cap 211 inside the battery cell 20. The first protrusion 213 and the first groove 231 are correspondingly disposed near at least one end of the end cap 211 along the length direction, allowing the first protrusion 213 and the first groove 231 to restrict the bending deformation of the end cap 211 in the edge region arranged along the length direction. In one possible implementation, the electrode terminal 22 may be disposed on two sidewalls 2121 arranged along the length direction X of the battery cell 20.

Considering that the length of the end cap 211 is much greater than its width and thickness, the bending deformation of the end cap 211 is most severe in the length direction. Therefore, disposing the electrode terminal 22 on at least one sidewall 2121 arranged along the length direction X of the battery cell 20 allows the first protrusion 213 and the first groove 231 to restrict the bending deformation of the end cap 211 in the most severely deformed portion, facilitating enhancement of the restrictive effect of the first protrusion 213 and the first groove 231 on the bending deformation of the end cap 211.

According to some embodiments of the present application, the casing 212 includes a bottom wall 2122 and a sidewall 2121, the bottom wall 2122 being opposite to the opening, and an area of a projection of the end cap 211 in a direction perpendicular to a thickness direction of the end cap 211 is greater than an area of a projection of the sidewall 2121 in a direction perpendicular to a thickness direction of the sidewall 2121.

The end cap 211 may be approximated as a plate-shaped structure, and the projection area of the end cap 211 in a direction perpendicular to its thickness direction is the area of the end cap 211; similarly, the sidewall 2121 may also be approximated as a plate-shaped structure, and the projection of the sidewall 2121 in a direction perpendicular to its thickness direction is the area of the sidewall 2121.

In some embodiments, the area of the end cap 211 is greater than the area of the sidewall 2121. Specifically, when the battery cell 20 includes multiple sidewalls 2121, the area of the end cap 211 may be greater than the area of each sidewall 2121.

When the area of the end cap 211 is relatively large, the cooperation between the first protrusion 213 and the first groove 231 can significantly restrict the bending deformation of the end cap 211, facilitating reduction of gaps between the end cap 211 and the casing 212, improving the fit between the end cap 211 and the casing 212, and thereby improving the pass rate of assembly of the battery cell 20.

According to some embodiments of the present application, a surface of the end cap 211 facing the interior of the battery cell 20 is provided with the first protrusion 213, and a surface of the insulating member 23 facing the end cap 211 is provided with the first groove 231.

As shown in FIGs. 3 to 10, the first protrusion 213 protrudes from the surface of the end cap 211 facing the insulating member 23 toward the insulating member 23, and the first groove 231 may be recessed from the surface of the insulating member 23 facing the end cap 211 in a direction away from the end cap 211. The mutual restriction between the sidewall of the first protrusion 213 and the sidewall of the first groove 231 can restrict the bending deformation of the end cap 211 due to its own weight.

At least a portion of the first protrusion 213 is accommodated in the first groove 231, and the insulating member 23 provides space for accommodating the first protrusion 213 in the first groove 231, eliminating the need to reserve additional space inside the battery cell 20 to accommodate the first protrusion 213 and the first groove 231, thereby maintaining the energy density of the battery cell 20.

In the battery cell 20 provided by embodiments of the present application, the first protrusion 213 and the first groove 231 cooperate with each other inside the battery cell 20, restricting deformation of the end cap 211 due to its own weight, thereby reducing gaps between the end cap 211 and the casing 212 caused by bending deformation of the end cap 211, and improving the pass rate of assembly during the process of assembling the end cap 211 with the casing 212. Additionally, by providing the first groove 231 on the insulating member 23 to accommodate the first protrusion 213, the internal structure of the battery cell 20 can be reasonably arranged without requiring additional space inside the battery cell 20 to accommodate the first protrusion 213, thereby reducing changes to the internal structure of the battery cell 20 and lowering the update cost of the battery cell 20.

According to some embodiments of the present application, a surface of the end cap 211 facing away from the interior of the battery cell 20 in a thickness direction Z of the battery cell 20 has a second groove 2131, the second groove 2131 corresponding to the first protrusion 213.

In some embodiments, the first protrusion 213 is formed on the surface of the end cap 211 facing the interior of the battery cell 20 by a process such as stamping. Specifically, during the processing of the end cap 211, processing equipment stamps the surface of the end cap 211 facing away from the interior of the battery cell 20, forming the first protrusion 213 on the surface of the end cap 211 facing the interior of the battery cell 20, while simultaneously forming the second groove 2131 corresponding to the first protrusion 213 on the surface of the end cap 211 facing away from the interior of the battery cell 20.

The second groove 2131 can indicate the position of the first protrusion 213 on the surface of the end cap 211 facing the interior of the battery cell 20 from the side of the end cap 211 facing away from the interior of the battery cell 20, identifying the end cap 211 provided with the first protrusion 213, thereby facilitating assembly of the first protrusion 213 on the end cap 211 with the first groove 231 on the insulating member 23 in a cooperative manner. Additionally, this can simplify the processing technology of the first protrusion 213, improving production efficiency.

According to some embodiments of the present application, a dimension of the end cap 211 in the thickness direction Z is less than or equal to 0.4 mm; and/or, a dimension of the end cap 211 in a length direction X is greater than or equal to 300 mm.

In some embodiments, the dimension of the end cap 211 in the thickness direction is less than or equal to 0.4 mm. In this case, the end cap 211 is relatively thin, making it easier to reduce the gap between the end cap 211 and the edge of the casing 212 when restricted by the first groove 231 and the first protrusion 213, improving the pass rate of assembly of the battery cell 20.

In some embodiments, the dimension of the end cap 211 in the length direction is greater than or equal to 300 mm. In this case, due to the relatively long length of the end cap 211, the first protrusion 213 and the first groove 231 disposed at two ends of the end cap 211 along the length direction can effectively reduce gaps between the end cap 211 and the casing 212 due to bending deformation, enabling good fit between the end cap 211 and the casing 212, thereby improving the welding quality between the end cap 211 and the casing 212 in subsequent processes.

In some embodiments, the dimensions of the end cap 211 in the thickness direction and the length direction simultaneously satisfy the above requirements, that is, the dimension of the end cap 211 in the thickness direction is less than or equal to 0.4 mm, and the dimension of the end cap 211 in the length direction is greater than or equal to 300 mm. When the end cap 211 satisfies these dimensional conditions, the first protrusion 213 on the end cap 211 and the first groove 231 on the insulating member 23 can cooperate with each other, effectively restricting the bending deformation of the end cap 211, thereby improving the welding quality between the end cap 211 and the casing 212 in subsequent processes, and improving the pass rate of assembly of the battery cell 20.

Embodiments of the present application also provide a battery 10, including the battery cell 20 according to any one of the embodiments described above.

Embodiments of the present application also provide an electric apparatus, including the battery 10 according to any one of the embodiments described above, the battery 10 being configured to provide electric energy to the electric apparatus.

Embodiments of the present application provide a battery cell 20, the battery cell 20 including a casing 212, an end cap 211, and an insulating member 23. The casing 212 includes a sidewall 2121 and a bottom wall 2122, the sidewall 2121 and the bottom wall 2122 enclosing a hollow structure with an opening at one end, and an electrode assembly 24 being accommodated in the casing 212. The electrode terminal 22 is disposed on the sidewall 2121 of the casing 212 arranged along the length direction of the end cap 211, and the insulating member 23 is disposed opposite to the electrode terminal 22 inside the battery cell 20, located between the sidewall 2121 and the electrode assembly 24. The end cap 211 is configured to cover the casing 212 to close the opening of the casing 212. A surface of the end cap 211 facing the interior of the battery cell 20 is provided with a first protrusion 213, and a surface of the insulating member 23 facing the end cap 211 is provided with a first groove 231, the first groove 231 and the first protrusion 213 cooperating with each other. When the length of the end cap 211 is much greater than its width and thickness, the first protrusion 213, under the restriction of the sidewall of the first groove 231, can reduce the bending deformation of the end cap 211 due to its own weight, enabling good fit between the edge of the end cap 211 and the edge of the casing 212, facilitating improvement of the pass rate of assembly of the battery cell 20.

The above descriptions are merely specific implementations of the present application, but the protection scope of the present application is not limited thereto. Any changes or substitutions that can be easily conceived by those skilled in the art within the technical scope disclosed by the present application should be covered within the protection scope of the present application. Therefore, the protection scope of the present application shall be subject to the protection scope of the claims.

## Claims

1. A battery cell **characterized by** comprising:
a casing (212) having an opening;
an end cap (211) closing the opening; and
an insulating member (23) disposed within the casing (212), wherein one of the insulating member (23) and the end cap is provided with a first groove, and the other thereof is provided with a first protrusion, the first groove (231) and the first protrusion (213) cooperating with each other.

2. The battery cell according to claim 1, **characterized in that**
the first protrusion (213) comprises a plurality of first protrusions (213), the plurality of first protrusions (213) being distributed at two ends of the battery cell (20) along a length direction (X) of the battery cell (20), wherein a dimension of the battery cell (20) in the length direction (X) is greater than a dimension of the battery cell (20) in a width direction (Y), and the dimension of the battery cell (20) in the width direction (Y) is greater than a dimension of the battery cell (20) in a thickness direction (Z).

3. The battery cell according to claim 1 or 2, **characterized in that**
a ratio of a dimension of the first protrusion (213) in the width direction (Y) of the battery cell (20) to the dimension of the battery cell (20) in the width direction (Y) is F, wherein F satisfies 30% ≤ F ≤ 90%, the dimension of the battery cell (20) in the length direction (X) is greater than the dimension of the battery cell (20) in the width direction (Y), and the dimension of the battery cell (20) in the width direction (Y) is greater than the dimension of the battery cell (20) in the thickness direction (Z).

4. The battery cell according to any one of claims 1 to 3, **characterized in that**
a surface of the first protrusion (213) facing a center of the end cap (211) is an inclined surface.

5. The battery cell according to any one of claims 1 to 4, **characterized in that**
a projection of the first protrusion (213) in the width direction (Y) of the battery cell (20) is trapezoidal, wherein the dimension of the battery cell (20) in the length direction (X) is greater than the dimension of the battery cell (20) in the width direction (Y) and the dimension of the battery cell (20) in the width direction (Y) is greater than the dimension of the battery cell (20) in the thickness direction (Z).

6. The battery cell according to claim 4 or 5, **characterized in that**
a surface where the first groove (231) cooperates with the first protrusion (213) is an inclined surface.

7. The battery cell according to any one of claims 1 to 6, **characterized in that**
the end cap comprises a main body portion and the first protrusion, the first protrusion being disposed on a surface of the main body portion facing an interior of the battery cell, with a first gap between the insulating member and the main body portion; or,
the insulating member comprises a main body portion and the first protrusion, the first protrusion being disposed on a surface of the main body portion facing the end cap, with a first gap between the main body portion and the end cap.

8. The battery cell according to claim 7, **characterized in that**
a dimension of the first gap in the thickness direction (Z) of the battery cell (20) is L, wherein L satisfies 0.05 mm ≤ L ≤ 0.5 mm, the dimension of the battery cell (20) in the length direction (X) is greater than the dimension of the battery cell (20) in the width direction (Y), and the dimension of the battery cell (20) in the width direction (Y) is greater than the dimension of the battery cell (20) in the thickness direction (Z).

9. The battery cell according to any one of claims 1 to 8, **characterized in that**
a second gap exists between a top wall of the first protrusion (213) and a bottom wall of the first groove (231).

10. The battery cell according to claim 9, **characterized in that**
a dimension of the second gap in the thickness direction (Z) of the battery cell (20) is M, wherein M satisfies 0.05 mm ≤ M ≤ 0.5 mm, the dimension of the battery cell (20) in the length direction (X) is greater than the dimension of the battery cell (20) in the width direction (Y), and the dimension of the battery cell (20) in the width direction (Y) is greater than the dimension of the battery cell (20) in the thickness direction (Z).

11. The battery cell according to any one of claims 1 to 10, **characterized in that**
the end cap comprises a main body portion and the first protrusion, the first protrusion being disposed on the surface of the main body portion facing the interior of the battery cell, wherein a distance between the top wall of the first protrusion (213) and a surface of the main body portion facing away from the interior of the battery cell is N, wherein N satisfies 0.3 mm ≤ N ≤ 1.5 mm.

12. The battery cell according to any one of claims 1 to 11, **characterized in that**
a dimension of the first groove (231) in the length direction (X) of the battery cell (20) is greater than a dimension of the first protrusion (213) in the length direction (X) of the battery cell (20), wherein the dimension of the battery cell (20) in the length direction (X) is greater than the dimension of the battery cell (20) in the width direction (Y), and the dimension of the battery cell (20) in the width direction (Y) is greater than the dimension of the battery cell (20) in the thickness direction (Z); and/or,
a dimension of the first groove (231) in the width direction (Y) of the battery cell (20) is greater than the dimension of the first protrusion (213) in the width direction (Y) of the battery cell (20), wherein the dimension of the battery cell (20) in the length direction (X) is greater than the dimension of the battery cell (20) in the width direction (Y) and the dimension of the battery cell (20) in the width direction (Y) is greater than the dimension of the battery cell (20) in the thickness direction (Z).

13. The battery cell according to any one of claims 1 to 12, **characterized in that**
an edge of the end cap (211) has a first stepped structure, the first stepped structure overlapping the casing (212), wherein a ratio of a height of the first stepped structure to a thickness of the end cap (211) is G, wherein G satisfies 40% ≤ G ≤ 60%.

14. The battery cell according to claim 13, **characterized in that**
the first stepped structure is welded to the casing (212).

15. The battery cell according to claim 1, **characterized in that**
the casing (212) comprises a bottom wall (2122) and a sidewall (2121), the bottom wall (2122) being opposite to the opening; and
the battery cell comprises an electrode assembly (24), the electrode assembly (24) being accommodated in a space enclosed by the bottom wall (2122) and the sidewall (2121) and the insulating member (23) being disposed between the sidewall (2121) and the electrode assembly (24).

16. The battery cell according to claim 1, **characterized in that**
the battery cell comprises an electrode terminal (22), the electrode terminal (22) being disposed on the end cap (211); or,
the casing (212) comprises a bottom wall (2122) and a sidewall (2121), the bottom wall (2122) being opposite to the opening, the battery cell (20) comprises an electrode terminal (22), and the electrode terminal (22) is disposed on the sidewall (2121).

17. The battery cell according to claim 16, **characterized in that**
the electrode terminal is disposed on at least one sidewall (2121) arranged along a length direction (X) of the battery cell (20).

18. The battery cell according to any one of claims 1 to 17, **characterized in that**
the casing (212) comprises a bottom wall (2122) and a sidewall (2121), the bottom wall (2122) being opposite to the opening, and an area of a projection of the end cap (211) in a direction perpendicular to a thickness direction of the end cap (211) is greater than an area of a projection of the sidewall (2121) in a direction perpendicular to a thickness direction of the sidewall (2121).

19. The battery cell according to claim 1, **characterized in that**
a surface of the end cap (211) facing an interior of the battery cell (20) is provided with the first protrusion (213), and a surface of the insulating member (23) facing the end cap (211) is provided with the first groove (231).

20. The battery cell according to claim 19, **characterized in that**
a surface of the end cap (211) facing away from the interior of the battery cell (20) in a thickness direction (Z) of the battery cell (20) has a second groove (215), the second groove (215) corresponding to the first protrusion (213).

21. The battery cell according to any one of claims 1 to 20, **characterized in that**
a dimension of the end cap (211) in the thickness direction (Z) is less than or equal to 0.4 mm; and/or,
a dimension of the end cap (211) in a length direction (X) is greater than or equal to 300 mm.

22. A battery **characterized by** comprising:
the battery cell according to any one of claims 1 to 21.

23. An electric apparatus **characterized by** comprising:
the battery according to claim 22, the battery being configured to provide electric energy to the electric apparatus.
